# EUROPÄISCHE PATENTANMELDUNG

(11) **EP 0 529 640 A1**
(43) Veröffentlichungstag der Anmeldung: **03.03.1993**
(21) Anmeldenummer: 92114672.6
(22) Anmeldetag: 27.08.1992
(51) Int. Cl.: C07F 9/38

(54) **Verfahren zur Herstellung von Alkanphosphonsäuren**

(30) Priorität: 29.08.1991 DE 4128758
(71) Anmelder: DR. TH. BÖHME KG CHEM. FABRIK GMBH & CO., D-82538 Geretsried (DE)
(72) Erfinder: Klein, Reinhard, W-8113 Kochel am See (DE); Jung, Karl-Heinz, W-8021 Icking (DE)
(74) Vertreter: Fehners, Klaus Friedrich, Dipl.-Ing., Dipl.-Wirtsch.-Ing.

(57) **Zusammenfassung**

Die Erfindung beschreibt ein Verfahren zur Herstellung von Alkanphosphonsäuren der allgemeinen Formel 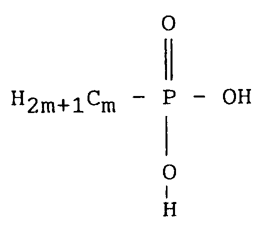
m = 1 bis 20
durch autokatalytische Hydrolyse von Alkanphosphonsäuredialkylestern der allgemeinen Formel 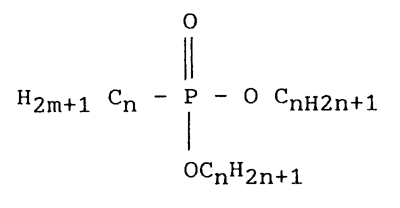
n = 1 bis 6
m und n können identisch sein
**dadurch gekennzeichnet**, daß die Hydrolyse bei Atmosphärendruck erfolgt und bis gegen Ende der Reaktion nicht mehr als die stöchiometrische Menge an Wasser mit einer derartigen Geschwindigkeit zugetropft wird, daß die Temperatur des Reaktionsgemisches 160°C nicht unterschreitet.

## Beschreibung

Die Erfindung betrifft ein Verfahren zur Herstellung von Alkanphosphonsäuren.

Alkanphosphonsäuren sind seit langem bekannt. Ihre Herstellung gelingt aus Orthophosphonsäure-tetrahalogeniden, aus Phosphonsäuredihalogeniden, aus Phosphonsäureestern, aus Phosphonsäurediamiden, aus schwefelhaltigen Phosphonsäuren, aus phosphonigen Säuren, aus primären Phosphinen, aus phosphoriger Säure und mit einigen weiteren, technisch unbedeutenden Verfahren.

Der technischen Darstellung der freien Phosphonsäuren über die Hydrolyse ihrer Dialkylester fällt eine besondere Bedeutung zu, da letztere bei vielen Synthesen, die zur Bildung einer Kohlenstoff-Phosphor Bindung führen, anfallen.

In der Regel wird die Spaltung mit verdünnten Halogenwasserstoffsäuren unter Druck oder mit konzentrierten Säuren unter Rückfluß durchgeführt.
(Houben-Weyl, Methoden der organischen Chemie, Band XII 1, Teil 1, 1963, S. 352 ff.)

Diese Verfahren weisen gravierende Nachteile auf, insofern als die Halogenwasserstoffsäuren stark korrosive Medien sind, mit den entsprechenden Auswirkungen auf die Herstellungsapparatur. Andererseits erfordert das genannte Herstellungsverfahren diverse Reinigungsschritte des Endproduktes, welche kostspielig und langwierig sind. Teilweise werden, wie im Falle der Methanphosphonsäure, die entsprechenden Alkanphosphonsäuren nicht durch Hydrolyse des aus dem jeweiligen Trialkylphosphit hergestellten Alkanphosphonsäuredialkylesters gewonnen, sondern müssen vorher noch umgeestert werden. Im Falle der Methanphosphonsäure dient der Methanphosphonsäuredibutylester als Zwischenstufe (H.W. s. u. S. 355, 3. J. Amer. chem. Soc. 75.3379-83 20/7 1953). Häufig werden bei dieser Verfahrensweise auch unzulängliche Ausbeuten erreicht.

Gemäß der DE OS 22 29 087 ist die Herstellung von Phosphonsäuren durch Verseifung der entsprechenden Phosphonsäureester möglich, wenn man die Ester in Gegenwart der zu bildenden Phosphonsäuren als Katalysator umsetzt, wobei bei Temperaturen von 90 bis 150°C gearbeitet werden muß. Dieses Verfahren ist zwar gegenüber den älteren wesentlich vorteilhafter, weil die Einschleppung von Fremdstoffen vermieden wird; nachteilig sind jedoch die niedrigen Temperaturen, die eine rasche Umsetzung unmöglich machen. Es wurde deshalb vorgeschlagen, die Hydrolyse unter erhöhtem Druck durchzuführen, wobei Temperaturen zwischen 105°C und 235°C möglich sein sollen. Gemäß der DE OS 27 45 982 muß dabei in der Reaktionsmischung eine mindestens doppelt molare Menge Wasser, bezogen auf die molare Menge zu bildender und/vorhandener saurer Hydroxylgruppen, vorliegen. Auch dieses Verfahren weist eine Reihe von Nachteilen auf: Die Umsetzung findet in einem Autoklaven statt, wobei das System den notwendigen Druck selbst erzeugt. Dabei ist es schwierig, das Ende der Reaktion festzustellen, da das System auch nach Reaktionsende weiter Wasser als Destillat abgibt, während sich der Eigendruck verändert. Ein weiterer Nachteil ist, daß eine relativ komplizierte und korrosionsfeste Autoklavenapparatur eingesetzt werden muß. Auch muß das anfallende Produkt zur Reinigung noch vom Wasser befreit werden, was zeit- und energieaufwendig ist.

Überraschenderweise konnte nun ein Verfahren bereitgestellt werden, das die vorgenannten Nachteile vermeidet. Alkanphosphonsäuren der allgemeinen Formel 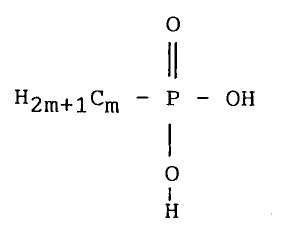
m = 1 bis 20
lassen sich schnell, sicher und bequem auf direktem Wege durch autoprotolytische Hydrolyse von Alkanphosphonsäuredialkylestern der allgemeinen Formel 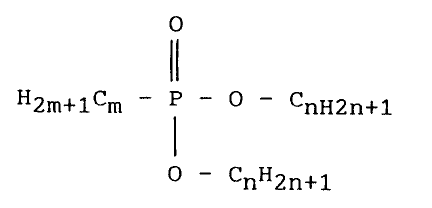
n = 1 bis 6
m und n können identisch sein herstellen, wobei die Umsetzung dadurch gekennzeichnet ist, daß die Hydrolyse bei Atmosphärendruck erfolgt und bis gegen Ende der Reaktion nicht mehr als die stöchiometrische Menge an Wasser mit einer derartigen Geschwindigkeit zugetropft wird, daß die Temperatur des Reaktionsgemisches 160°C nicht unterschreitet. Bevorzugt sollte dabei die Temperatur 210°C nicht überschreiten. Es empfiehlt sich, als Katalysator etwa 5 bis 20 Gewichts-% an der zu bildenden Alkanphosphonsäure einzusetzen. Bei einer geringeren Menge kann die Reaktion nicht mehr in der gewünschten Geschwindigkeit ablaufen, eine Menge von über 20 Gewichts-% verringert die umsetzbare Charge an Phosphosäureester, ohne jedoch die Geschwindigkeit der Reaktion noch steigern zu können. Aufgrund dieser Verfahrensweise unterbleibt zum einen die bei Fremdkatalyse nicht zu verhindernde Einschleppung von Fremdstoffen, andererseits werden auch die genannten Nachteile der bekannten autokatalytischen Verfahren vermieden.

Im einzelnen verfährt man dabei so, daß der Alkanphosphonsäuredialkylester mit dem Zusatz von 5 - 20 % Alkanphosphonsäure vorgelegt wird und auf bevorzugt 160 - 180°C erhitzt wird. Unter Rühren wird in die flüssige Masse die stöchiometrische Menge Wasser nach und nach in kleinen Portinen zudosiert. Ein leichter Überschuß der für die Umsetzung erforderlichen Menge Wasser kann gegen Ende der Reaktion, jedoch nicht früher, fakultativ zugegeben werden. Dieses Wasser dient als Indikator für das Ende der Reaktion und als Wärmeüberträger.

Auf dem Reaktionsgefäß befindet sich ein Rückflußkühler, der mit warmem Wasser gespeist wird. Die Temperatur des Kühlmediums wird auf 5°C über der Siedetemperatur des abzuspaltenden Alkohols eingestellt, um sein Entweichen nicht zu behindern (z.B. ca. 70°C Methanol).

Am Kopf des Rückflußkühlers befindet sich eine Brücke, in der der abgespaltene Alkohol kondensiert wird.

Der Fortgang der Reaktion ist sehr leicht an der Menge des abgespaltenen Alkohols zu kontrollieren. Die Umsetzung ist vollständig, wenn die theoretische Menge an Alkohol überdestilliert ist und trotz weiterer Zugabe von Wasser kein Destillat mehr entsteht. Nach dem Abkühlen der Reaktionsmischung auf 110 - 120°C werden unter Vakuum Restmengen an Alkohol und Wasser entfernt. Dabei erhält man sirupöse Alkanphosphonsäuren, die als flüssige Schmelze sofort in heizbare Behälter überführt werden und die bei weiterem Abkühlen kristallisieren und völlig farblos sind. Alternativ kann die Reaktionsmischung in Hinblick auf die weitere Verwendung nach Belieben verdünnt werden.

### Beispiel 1

Eine Mischung aus 248,2 g (2 mol) Methanphosphonsäuredimethylester und 25,0 g (0,26 mol) Methanphosphonsäure werden in einem Dreihalskolben mit KPG-Rührer, Rückflußkühler und Tropftrichter auf 170°C erhitzt. Nach Erreichen dieser Temperatur wird aus dem Tropftrichter allmählich - zunächst tropfenweise - 75 g (4,16 mol) Wasser so zudosiert, daß die Temperatur der Mischung nicht unter 160°C sinkt.

Der Rückflußkühler wird mit 70°C warmem Wasser gespeist, um den Reaktionspartner Wasser am Rückfluß zu halten, andererseits aber abgespaltenes Methanol aus dem Reaktionsgefäß entweichen zu lassen. Methanol wird in einer Brücke, die dem Rückflußkühler nachgeschaltet ist, kondensiert. Durch Einleiten von Stickstoff wird die Entfernung des Methanols beschleunigt. Nach etwa drei Stunden, wenn die Gesamtmenge an Wasser zudosiert ist, versiegt allmählich der Methanolstrom.

Man erhitzt weiterhin eine halbe Stunde, läßt dann auf 110°C unter Rühren abkühlen und evakuiert dann etwa 10 min. mit der Wasserstrahlpumpe, um Restmengen an Methanol und Wasser aus der entstandenen Methanphosphonsäure zu entfernen. Der Kolbeninhalt kristallisiert bei weiterem Abkühlen zu rein weißer Methanphosphonsäure (Schmelzpunkt 102° - 105°C).

Ausbeute: 214,1 g (98,5 % der Theorie).

### Beispiel 2

332,4 g (2 mol) Ethanphosphonsäurediethylester wird in der bei Beispiel 1 beschriebenen Apparatur mit 25,0 g Ethanphosphonsäure (0,23 mol) versetzt und unter Rühren auf 170°C erhitzt. Nach Erreichen der Temperatur wird langsam Wasser zugetropft (insgesamt 81 g (4,5 mol) Überschuß wegen Azeotrop!) wobei darauf zu achten ist, daß die Temperatur des Reaktionsgemisches 160°C nicht unterschreitet.

Die Temperatur des Kühlmediums im Rückflußkühler beträgt 80°C. Nach Zugabe des gesamten Wassers versiegt allmählich der Ethanolstrom in der Brücke. Man erhitzt dann noch 1/2 Stunde und läßt anschließend auf 120°C abkühlen. Im Wasserstrahlvakuum werden Restmengen an Ethanol und Wasser abgezogen. Bei weiterem Abkühlen auf Raumtemperatur kristallisiert die Ethanphosphonsäure in weißen Kristallen (Schmelzpunkt 57° - 59°C).

Ausbeute: 239,7 g (97,8 % der Theorie).

### Beispiel 3

Eine Mischung aus 150,0 g Oktanphosphonsäurediethylester (0,68 mol) und 15,0 g Oktanphosphonsäure (0,077 mol) wird in der bei Beispiel 1 beschriebenen Apparatur unter Rühren auf 190°C erhitzt und anschließend langsam 28,4 g Wasser (1,58 mol) zudosiert, so daß die Temperatur des Reaktionsgemisches 170°C nicht unterschreitet. Der Rückflußkühler wird mit 80°C warmem Wasser gespeist. In die Vorlage destilliert ein azeotropes Gemisch aus 88% Ethanol und 12% Wasser. Nach vollständiger Wasserzugabe versiegt allmählich der Destillatstrom. Man erhitzt weiterhin 30 Minuten, läßt dann auf 120°C abkühlen und zieht im Wasserstrahlvakuum Restmengen an Ethanol und Wasser ab. Nach dem Abkühlen auf Raumtemperatur erhält man eine hellgelbe sirupöse Flüssigkeit aus Oktanphosphonsäure die beim Abkühlen kristallisiert (Schmelzpunkt 99° - 100°C).

Ausbeute: 139,5 g (95%)

## Patentansprüche

1. Verfahren zum Herstellen von Alkanphosphonsäuren der allgemeinen Formel 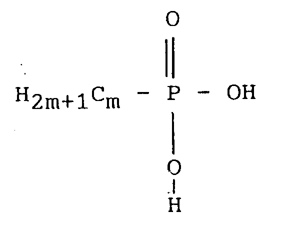 m = 1 bis 20
durch autoprotolytische Hydrolyse von Alkanphosphonsäuredialkylestern der allgemeinen Formel 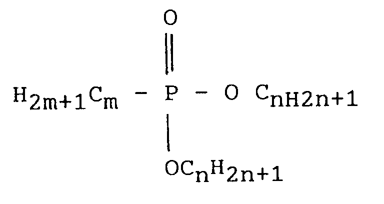 n = 1 bis 6
m und n können identisch sein
**dadurch gekennzeichnet**, daß die Hydrolyse
bei Atmosphärendruck erfolgt und bis gegen Ende der Reaktion nicht mehr als die stöchiometrische Menge an Wasser mit einer derartigen Geschwindigkeit zugetropft wird, daß die Temperatur des Reaktionsgemisches 160°C nicht unterschreitet.

2. Verfahren nach Anspruch 1, **dadurch gekennzeichnet**, daß der Katalysator in einer Menge von 5 - 20 Gewichtsprozent, bezogen auf Alkanphosphonsäuredialkylester, eingesetzt wird.

3. Verfahren nach einem der Ansprüche 1 und 2, **dadurch gekennzeichnet**, daß die Temperatur des Reaktionsgemisches 160° bis 210°C beträgt.

4. Verfahren nach einem der Ansprüche 1 - 3, **dadurch gekennzeichnet**, daß der Reaktionspartner Wasser in kleinen Mengen diskontinuierlich oder kontinuierlich zudosiert wird.

5. Verfahren nach einem der Ansprüche 1 - 4, **dadurch gekennzeichnet**, daß der Rückflußkühler mit einem temperierten Kühlmedium gespeist wird, dessen Temperatur etwa 5°C über dem Siedepunkt des frei werdenden Alkohols liegt und der abgespaltene Alkohol in einer dem Rückflußkühler nachgeschalteten Brücke kondensiert wird.

6. Verfahren nach einem der Ansprüche 1 - 5, **dadurch gekennzeichnet**, daß im Falle von Alkanphosphonsäurediestern, deren Esteralkyle Alkoholen mit Siedepunkten nahe oder über 100°C entsprechen, das Wasser aus dem abdestillierten Azeotrop kontinuierlich in das Reaktionsgefäß zurückgeführt wird.
